# EUROPEAN PATENT APPLICATION

(11) **EP 2 207 007 A1**
(43) Date of publication of application: **14.07.2010**
(21) Application number: 09180394.0
(22) Date of filing: 22.12.2009
(51) Int. Cl.: G01B 7/06, G01N 27/82

(54) **Method for detecting and removing a nitride layer formed on the surface of a steel alloy**

(30) Priority: 08.01.2009 US 350476
(71) Applicant: General Electric Company, Schenectady, NY 12345 (US)
(72) Inventor: King, Warren Tan, Greenville, SC 29602 (US); Pope, Stephen Gerard, Roebuck, SC 29376 (US); Drake, Susan, Greenville, SC 29650 (US)
(74) Representative: Gray, Thomas

(57) **Abstract**

A method of treating a component made of a non-magnetic alloy on which a magnetic surface layer has formed includes: (a) engaging a magnet of a calibrated magnet gauge with a surface of the component; (b) disengaging the magnet from the surface of the component and measuring a force required to disengage the magnet; (c) correlating the force with a thickness of the magnetic surface layer; and (d) if the thickness of the surface layer is greater than a predetermined minimum thickness, removing the surface layer.

## Description

This invention relates generally to turbine combustor hardware and, more specifically, to the detection and determination of an appropriate course of action to be taken with respect to a nitride layer formed on the surface of an austenitic steel alloy.

### BACKGROUND OF THE INVENTION

Nimonic® alloy 263, a precipitation-hardenable nickel-chromium-cobalt alloy (referred to herein as "N-263"), is a proprietary alloy of International Nickel Corp. often used in the manufacture of combustor hardware for turbomachinery. One of the deterioration mechanisms associated with N-263 is nitriding that occurs when the alloy is exposed to temperatures above 2000°F. Nitriding is an elevated-temperature, irreversiable process by which the alloy absorbs nitrogen atoms into the surface when exposed to a high-nitrogen environment. The nitrogen atoms are diffused into the alloy to form a high-nitrogen surface layer which must be removed. The current repair procedure is to use a simple magnet to check for the presence of a nitride layer on the surface of the alloy. Once a magnetic response is detected, the surface is ground in a trial-and-error method until the magnetic response is gone. The current method is crude, particularly since the detection technique does not determine the amount of nitride to be removed. In other words, the current methodology does not give shop personnel any information regarding the amount of distress present in the alloy material, nor the extent of any machining required to remove the undesirable nitride layer.

Thus, the present techniques are time consuming and imprecise, and accordingly, there remains a need for a more effective detection/removal procedure.

### BRIEF DESCRIPTION OF THE INVENTION

In one aspect, the invention relates to a method of treating a component made of a non-magnetic alloy on which a magnetic surface layer has formed comprising: (a) engaging a magnet of a calibrated magnet gauge with a surface of the component; (b) disengaging the magnet from the surface of the component and measuring a force required to disengage the magnet; (c) correlating the force with a thickness of the magnetic surface layer; and (d) if the thickness of the surface layer is greater than a predetermined minimum thickness, removing the surface layer.

In another aspect, the invention relates to a method of detecting a nitride layer on a surface of a nickel-chromium-cobalt alloy component comprising: (a) engaging a calibrated magnet gauge with the surface of the alloy component; (b) detecting the presence, if any, of a nitride layer on the surface of the alloy component; and if present; (c) measuring the force necessary to remove the magnet gauge from the surface of the alloy component and using that information to determine a thickness of the nitride layer.

The invention will now be described in connection with the above-identified drawing figures in greater detail below.

### BRIEF DESCRIPTION OF THE DRAWINGS

There follows a detailed description of embodiments of the invention by way of example only with reference to the accompanying drawings, in which:
FIGURE 1 is a partial elevation view in schematic form of a known calibrated magnet gauge utilized in the process of this invention; and
FIGURE 2 is a schematic diagram of a process for detecting and removing a nitride layer in accordance with an exemplary embodiment of the invention.

### DETAILED DESCRIPTION OF THE INVENTION

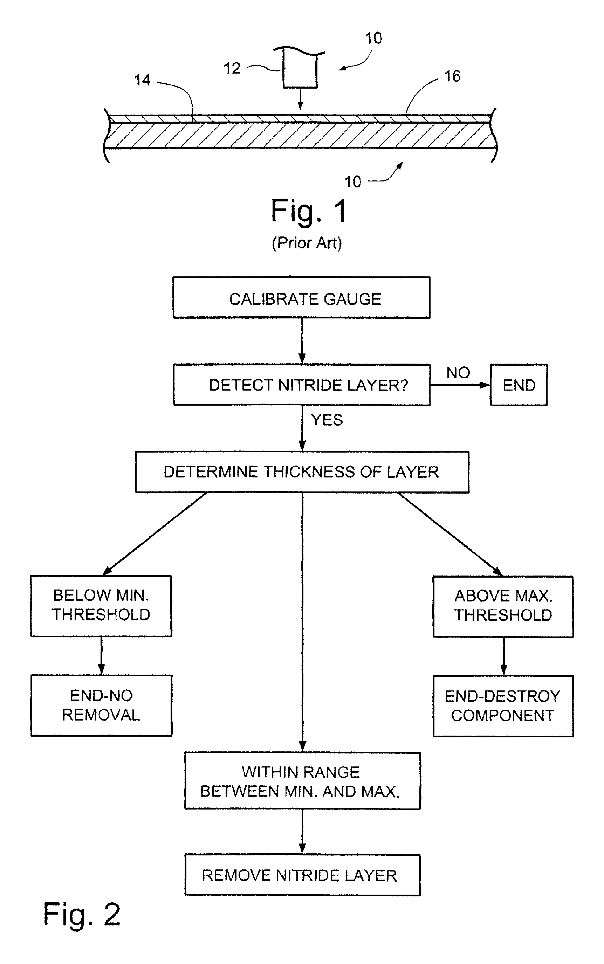

Figure 1 is a schematic representation of a commercially-available calibrated magnet gauge 10 of the type typically used, for example, in the steel industry to measure an applied coating thickness. Such gauges are essentially sensitive spring balances that indicate on a graduated dial the degree of force necessary to detach its permanent

### DETAILED DESCRIPTION OF THE INVENTION

Figure 1 is a schematic representation of a commercially-available calibrated magnet gauge 10 of the type typically used, for example, in the steel industry to measure an applied coating thickness. Such gauges are essentially sensitive spring balances that indicate on a graduated dial the degree of force necessary to detach its permanent magnet from the surface of the specimen. Specifically, the operator will typically bring the gauge magnet 12 into contact with a specimen surface 14 and a dial records the force required to remove the magnet 12. When referenced to a calibration curve, a thickness dimension for the applied coating 16 may be determined. Calibrated magnet gauges are readily available, and one suitable gauge is sold under the trade name Magne-Gage®, available from Magne-Gage Sales and Service Co., Inc. of Avoca, PA.
Figure 2 is a schematic diagram of the process methodology used in an exemplary implementation of the subject invention. Specifically, the magnetic gauge 10 is calibrated to the thickness of magnetic nitride layers on N-263 substrates and an appropriate chart, computer program, or the like is developed to correlate the actual test data to the calibrated data. When the magnetic head 12 is applied to the surface of the N-263 alloy component (an austenitic, non-magnetic alloy), if any nitride layer is present, the magnet will be attracted to the surface layer, thus providing an easy initial detection of the layer. If there is no magnetic attraction, the test procedure simply ends. On the other hand, if there is a magnetic attraction, the magnet will be attracted to the surface of the alloy. The gauge is thereafter withdrawn and the force necessary to remove the magnet is recorded and referenced against the prior calibration, to thereby determine the thickness of the nitride layer. If the detected layer is below a minimum threshold thickness, the component part may be regarded as usable with no requirement for removing the nitrided layer at that time. In other words, there may well be a point at which the nitride layer is so minimal, that no further action is required and the component part may be returned to service.
grinding or machining (or any other suitable process or operation) that may itself be calibrated to remove only the detected thickness of the nitride layer.

Thus, by using a calibrated magnetic gauge to determine the thickness of any nitride layer that may have formed on the component part, it is possible to more easily and quickly determine what action is to be taken, particularly when combined with process steps that eliminate certain components above or below predetermined threshold thickness measurements from any further processing.

It will be appreciated that a similar process may be used to detect undesirable surface deterioration on other alloys, so long as the underlying substrate is non-magnetic and the surface deterioration layer magnetic.

## Claims

1. A method of treating a component made of a non-magnetic alloy on which a magnetic surface layer has formed comprising:
(a) engaging a magnet of a calibrated magnet gauge with a surface of the component;
(b) disengaging the magnet from the surface of the component and measuring a force required to disengage the magnet;
(c) correlating the force with a thickness of the magnetic surface layer; and
(d) if the thickness of the surface layer is greater than a predetermined minimum thickness, removing the surface layer.

2. The method of claim 1, wherein if, in step (d), the thickness of the surface layer is greater than a predetermined maximum thickness, disposing the component without removing the surface layer.

3. The method of claim 1 or 2, wherein the non-magnetic alloy comprises an austenitic nickel-chromium-cobalt alloy.

4. The method of any of the preceding claims, wherein the surface layer is a nitride layer.

5. The method of claim 4, wherein the non-magnetic alloy is a nickel-chromium-cobalt alloy.

6. A method of detecting a nitride layer on a surface of a nickel-chromium-cobalt alloy component comprising:
(a) engaging a calibrated magnet gauge with the surface of the nickel-chromium-cobalt alloy component;
(b) detecting the presence, if any, of a nitride layer that may have formed on the surface of the nickel-chromium-cobalt alloy component; and
if the nitride layer is present;
(c) measuring the force necessary to remove the magnet gauge from the surface of the nickel-chromium-alloy component and using that information to determine a thickness of the nitride layer.

7. The method of claim 6, wherein, for any detected nitride layer, determining threshold minimum and maximum thicknesses of the nitride layer, between which removal of the nitride layer is effected.

8. The method of claim 7, wherein for thicknesses of the nitride layer below the threshold minimum thickness or above the threshold maximum thickness, the detected nitride layer is not removed.

9. The method of claim 7 or 8, wherein removal is effected by machining or grinding.

10. The method of any of claims 6 to 9, wherein said nickel-chromium-cobalt alloy component comprises a gas turbine combustor component.
